(19) **Europäisches Patentamt**
**European Patent Office**
**Office européen des brevets**

(11) **EP 2 429 232 B1**

(12) **EUROPEAN PATENT SPECIFICATION**

(45) Date of publication and mention
of the grant of the patent:
**12.02.2020 Bulletin 2020/07**

(21) Application number: **09844295.7**

(22) Date of filing: **11.12.2009**

(51) Int Cl.:
*H04W 28/20* <sup>(2009.01)</sup>    *H04W 28/02* <sup>(2009.01)</sup>

(86) International application number:
**PCT/CN2009/075517**

(87) International publication number:
**WO 2010/127543 (11.11.2010 Gazette 2010/45)**

(54) **METHOD AND EQUIPMENT FOR SELECTING TERMINAL DURING CONGESTION PROCESS**

VERFAHREN UND GERÄTE ZUM AUSWÄHLEN VON ENDGERÄTEN WÄHREND EINES STAUPROZESSES

PROCÉDÉ ET ÉQUIPEMENT ADAPTÉS POUR SÉLECTIONNER UN TERMINAL DANS LE CAS D'UN PROCESSUS DE CONGESTION

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **04.05.2009 CN 200910083357**

(43) Date of publication of application:
**14.03.2012 Bulletin 2012/11**

(73) Proprietor: **ZTE Corporation**
**Shenzhen, Guangdong 518057 (CN)**

(72) Inventor: **JIN, Shiying**
**Shenzhen**
**Guangdong 518057 (CN)**

(74) Representative: **Iannone, Carlo Luigi**
**Barzanò & Zanardo Milano S.p.A.**
**Via Borgonuovo 10**
**20121 Milano (IT)**

(56) References cited:
**EP-A1- 1 317 151**    **WO-A1-2008/145178**
**WO-A1-2009/008817**    **WO-A2-2008/112774**
**CN-A- 101 132 360**    **JP-A- 2008 300 908**
**US-A1- 2005 107 107**    **US-A1- 2007 264 986**
**US-A1- 2008 159 128**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to the congestion processing field in the wireless communication system, and particularly, to a method and apparatus for selecting a terminal during congestion processing.

Background of the Related Art

When congestion occurs or it is forecasted that the congestion is going to occur, in the traditional wireless communication system, generally, new users or new connection are refused to access the network, or the current accessed users or connections are released. However, for the communication system introducing the Adaptive Modulation Coding (AMC) and the power control technique, for example the World Interoperability for Microwave Access (WiMAX) system, since the user or terminal can change the used Modulation Order Product Code Rate (MPR) according to the current signal quality and power control strategy, namely the efficiencies of bearing data are different for using different MPRs, and thus the capacity of the whole air interface shows a huge fluctuate with the difference of the MPRs. Therefore, the method of refusing new users or new connections accessing the network, or releasing the current users or connections will severely affect the Quality of Service (QoS) experience of the user, it is not the optimal processing way of the congestion control, and is not recommended generally.

At present, a more general method of congestion processing in the communication system is: the base station triggering the handover flow for the accessed terminals to make the terminal to hand over to the adjacent base station with idler resources, which not only implements the congestion control processing, but also does not affect the QoS experience of the accessed terminal users. When the priorities of congestion processing of various terminals in the system are determined, the general method is to define that: the larger the minimal reserved bandwidth requested by the terminal is, the higher the priority of congestion processing is. However, when the differences among the minimal reserved bandwidths requested by the accessed terminals are not very large, particularly when the terminals use different MPRs since the intensities for receiving or transmitting the signal are different and data amounts transmitted by different terminals make a great difference, this strategy of determining the priority of congestion processing of the terminal only according to the minimal reserved bandwidth is uncertainly reliable.

For example, in the communication system with 2M common resource amount, there are two terminals, terminal A and terminal B, respectively occupying 1M resource amount, and when the congestion occurs, a certain terminal is handover from or released, and its resources are used by the remained terminal. If the difference between the minimal reserved bandwidths requested by the terminal A and the terminal B is very small, however, for the MRPs used by the terminal A and the terminal B, the difference between bandwidth utilization ratios is very large, for example the bandwidth utilization ratio of the terminal A is n however the bandwidth utilization ratio of the terminal B is 2n, then if the remained one is the terminal A, the whole throughput of the communication system is 2nM; and if the remained one is the terminal B, then the whole throughput of the communication system is 4nM.

It can be seen that determining the congestion processing priority only according to the size of the minimal reserved bandwidth is uncertainly able to obtain the prospective effect, and even sometimes will cause a severe affect on the performance of the communication system or the utilization efficiency of the resource.

The document US2005/0107107 A1 discloses a wireless communication network providing priority for one type of users over another type of users relative to one or more network finite resources shared by the different types of users.

Summary of the Invention

In view of this, the main object of the present invention is to provide a method and apparatus for selecting a terminal during congestion processing, which is able to effectively, rapidly and reasonably determine the priorities of congestion processing of various current terminals when the congestion occurs in the communication system.

In order to achieve the above object, the present invention discloses a method according to claim 1 and apparatus according to claim 7. Further improvements and embodiments are provided in the dependent claims.

Also provided is a method for selecting a terminal during congestion processing, which comprises: obtaining the minimal reserved bandwidths and bandwidth utilization ratios of various terminals which have accessed a network, and setting a threshold; when congestion occurs, a base station determining initial priorities of congestion processing of the terminals, obtaining secondary priorities of congestion processing of the terminals according to a size relationship of a difference percent of the minimal reserved bandwidths of every two adjacent terminals and a set threshold, and bandwidth utilization ratios; and sequencing the obtained secondary priorities, and selecting one or more terminals to process the congestion.

In the above method, said obtaining the minimal reserved bandwidths and bandwidth utilization ratios of terminals which have accessed the network comprises: calculating the minimal reserved bandwidths and bandwidth utilization ratios of various terminals which have accessed the network, wherein said minimal reserved bandwidth is: a ratio of a summation of the minimal reserved rates of all connections of a terminal and the bandwidth utilization ratio of this terminal; said bandwidth utilization ratio is: the bandwidth utilization ratio of a terminal accessing at the first time is a product of a modulation coding rate and $(1-\alpha)$, said $\alpha$ is a overhead ratio of a media access control sub-layer and a physical layer; the bandwidth utilization ratio of a terminal not accessing at the first time is a ratio of a data amount transmitted by the terminal during an unit time and the number of slots allocated during the unit time.

Wherein said obtaining the minimal reserved bandwidths and bandwidth utilization ratios of various terminals which have accessed the network further comprises: recording the calculated minimal reserved bandwidths and bandwidth utilization ratios, and updating the minimal reserved bandwidths and bandwidth utilization ratios of the various terminals which have accessed the network, wherein said updating the minimal reserved bandwidths and bandwidth utilization ratios of the various terminals which have accessed the network is: updating said minimal reserved bandwidths according to changes of data service connection parameter and the bandwidth utilization ratio of the terminal; updating said bandwidth utilization ratio according to resource allocation of the terminal, a change of the modulation coding rate, and changes of the service connection parameters, transmitted data amount and a wireless network environment. Said base station determining initial priorities of congestion processing comprises: sequencing the terminals which have accessed the network according to the minimal reserved bandwidths from large to small, taking this sequence as the initial priorities of congestion processing of the terminals which have accessed the network, and recording said initial priorities into a terminal list.

In the above method, said obtaining secondary priorities of congestion processing of terminals comprises:

a1. judging whether the difference percent of the minimal reserved bandwidths of two adjacent terminals in the terminal list is less than the set threshold, if less than the set threshold, comparing the bandwidth utilization ratios of said two adjacent terminals, selecting a terminal with a lower bandwidth utilization ratio as a secondary priority terminal, and performing step a2;

if not less than the set threshold, then said secondary priorities of congestion processing of said two adjacent terminals being the same with the initial priority, and performing step a2;

a2. judging whether all the terminals which have accessed the network are ergodic, if not ergodic, then judging the secondary priority of an unergodic terminal; and if ergodic, then determining the secondary priorities of congestion processing of terminals, selecting one or more terminal for congestion processing.

Before judging whether all the terminals which have accessed the network are ergodic, said method further comprises: updating the sequence of the terminal corresponding to said secondary priority in the terminal list according to the obtained secondary priorities of congestion processing of the terminals. Said judging the secondary priority of the unergodic terminal comprises: selecting a terminal with the lowest secondary priority, and terminals sequenced after the terminal with the lowest secondary priority and adjacent with the terminal with the lowest secondary priority as the present ergodic objects; judging the sizes of the difference percent of the minimal reserved bandwidths of the present ergodic objects and said set threshold, wherein said difference percent of the minimal reserved bandwidths of two adjacent terminals is: percent difference between the minimal reserved bandwidths requested by two adjacent terminals to the minimal reserved bandwidth of the terminal with the higher initial priority in the two adjacent terminals. Said congestion processing comprises: disconnecting a network connection of a selected terminal or handing over the selected terminal to an adjacent cell base station; wherein a congestion processing way of handing over the selected terminal to the adjacent cell base station comprises: triggering the selected terminal to scan a signal of the adjacent cell base station, and when the signal of the adjacent cell base station is scanned and obtained, handing over said selected terminal to said adjacent cell base station.

In order to implement the above method, the present invention also provides an apparatus for selecting a terminal during congestion processing, comprising an obtainment unit and a terminal selection unit, wherein the obtainment unit is for obtaining the minimal reserved bandwidths and bandwidth utilization ratios of various terminals which have accessed a network, and reporting the obtained minimal reserved bandwidths and bandwidth utilization ratios to the terminal selection unit; the terminal selection unit is for determining initial priorities and secondary priorities of the terminals, and selecting one or more terminals to process the congestion according to a sequence of the secondary priorities of congestion processing of the terminals.

In the above apparatus, said obtainment unit is particularly for calculating, recording and updating the minimal reserved bandwidths and bandwidth utilization ratios of various terminals which have accessed the network; this apparatus further comprises a resource allocation unit, a traffic statistic unit and a congestion monitor unit, wherein the resource allocation unit is for allocating resources for transmitting data for each terminal or connection, and sending data amount transmitted by the terminal and resource information allocated to this terminal to said traffic statistic unit, said obtainment unit and said traffic statistic unit; the traffic statistic unit is for carrying out periodical statistic on the data amount transmitted on each terminal or connection, and when the congestion occurs, reporting statistic data to the terminal selection unit; the congestion monitor unit is for monitoring whether the congestion occurs in a base station, and when the congestion occurs, reporting the congestion state to the terminal selection unit.

In the above apparatus, said terminal selection unit comprises an initial priority judgment sub-unit, a threshold judgment sub-unit, a secondary priority judgment sub-unit, and a terminal selection sub-unit, wherein the initial priority judgment sub-unit is for determining the initial priorities of the congestion processing; the threshold judgment sub-unit is for judging whether the difference percent between the minimal reserved bandwidths of every two adjacent terminals in a terminal list is less than a set threshold, and sending a judgment result to the secondary priority judgment sub-unit; the secondary priority judgment sub-unit is for comparing the bandwidth utilization ratios of two adjacent terminals of which the difference percent of the minimal reserved bandwidths is less than the set threshold, which is determined by the threshold judgment sub-unit, to obtain the secondary priorities of processing the congestion; the terminal selection sub-unit is for selecting one or more terminals to process the congestion according to the secondary priorities determined by said secondary priority judgment sub-unit.

Wherein said initial priority judgment sub-unit is further for receiving a congestion state reported by said congestion monitor unit, obtaining the minimal reserved bandwidth from said obtainment unit, and generating the terminal list recording said initial priorities; said secondary priority judgment sub-unit is further for obtaining the bandwidth utilization ratios from said obtainment unit, selecting a terminal with a lower bandwidth utilization ratio as a terminal with a higher secondary priority, and updating the sequence of the corresponding terminals in the terminal list according to obtained secondary priorities.

It can be seen from the above technical scheme that the method and apparatus for selecting a terminal during the congestion processing of the present invention are able to select a suitable terminal for processing the congestion when the congestion occurs in the communication system, and further improve the performance and efficiency of congestion processing. Particularly, the terminals are sequenced according to the size of the respective minimal reserved bandwidth from large to small and the initial priorities are determined, namely the larger the minimal reserved bandwidth of the terminal is, the higher the priority of congestion processing of the terminal is; then in terminals with determined initial priorities, if the difference percent of the minimal reserved bandwidths requested by two adjacent terminals is less than the threshold k, the secondary priorities are determined according to bandwidth utilization ratios of terminals, and at this time, the lower the bandwidth utilization ratio of the terminal is, the higher priority of congestion processing of the terminal is. Thus, the terminal can be effectively and reasonably selected by further determining the secondary priority of congestion processing to process the congestion, which avoids carrying out congestion processing operation such as the handover and interrupting the connection on the terminal with higher bandwidth utilization ratio in two terminals of which the difference between the minimal reserved bandwidths is not large, is able to improve the performance and efficiency of congestion processing, and at the same time is able to sufficiently utilize the resources and improve the utilization efficiency of the resources.

Besides, the base station will store the obtained data after calculating or updating the minimal reserved bandwidths and bandwidth utilization ratios of various terminals, so as to be able to rapidly determine the priority of congestion processing of the terminal when the congestion occurs in the communication system.

It can be seen that the present invention sufficiently considers the characteristics of the terminal from two aspects, the resource occupation amount and the bandwidth utilization ratio, secondarily sequencing the priorities of terminals, and further reasonably, effectively, and rapidly selects the terminal to process the congestion, which not only improves the performance and efficiency of congestion processing, but also implements the sufficient utilization of the resources.

Brief Description of Drawings

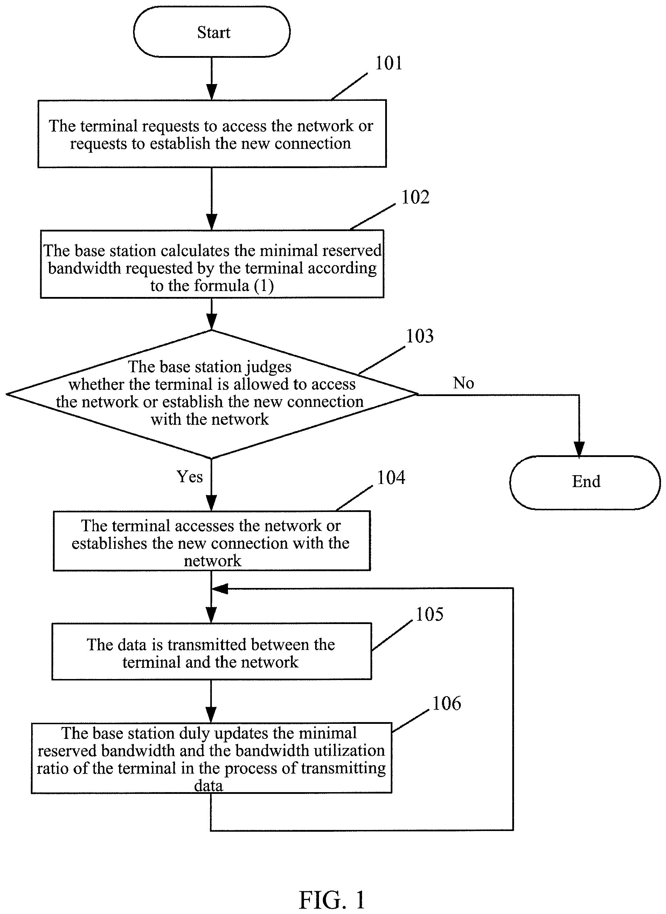

FIG. 1 is a schematic diagram of the implementation flow of the terminal establishing the connection with the network and transmitting data according to the present invention;

FIG. 2 is a schematic diagram of the implementation flow of the method for selecting a terminal during congestion processing according to the present invention;

FIG. 3 is a composition schematic diagram of the apparatus example for selecting a terminal during congestion processing according to the present invention.

Preferred Embodiments of the Present Invention

The basic concept of the present invention is that: when a congestion occurs in the communication system, terminals are sequenced according to the size of respective minimal reserved bandwidths from large to small at first, and initial priorities are determined, namely the larger the minimal reserved bandwidth of the terminal is, the higher the priority of congestion processing of the terminal is. If the difference percent of the minimal reserved bandwidths requested by two adjacent terminals of which priorities have been initially determined is less than threshold k, the secondary priority is determined according to the bandwidth utilization ratio of the terminal, and at this time, the lower the bandwidth utilization ratio of the terminal is, the higher the priority of congestion processing of the terminal is.

It should be illustrated that the priority of congestion processing of the terminal in the present invention includes the initial priority and the secondary priority.

In order to make the above objects, features and advantages more obvious and understandable, below it will further describe the present invention with reference to the figures and particular examples in detail.

When the terminal requests to establish the connection with the network, the base station will calculate and record the resource occupation amount of the terminal, and carry out acceptance judgment on the connection request of the terminal. Herein, the resource occupation amount of said terminal includes: the minimal reserved bandwidth and the maximal reserved bandwidth and so on. One terminal can establish a plurality of connections, and thus the connection that the terminal requests to establish with the network can be for the first access of the terminal, and also can be a new connection that the terminal which has accessed the network further establishes based on the original connection.

Wherein said minimal reserved bandwidth is the ratio of the summation of the minimal reserved rates of all the connections of the terminal to the bandwidth utilization ratio of this terminal. The particular calculation process for said minimal reserved bandwidth is as follows:

when the terminal requests to access the base station at the first time or a new connection is established, the base station calculates the minimal reserved bandwidth requested by the terminal or the connection, and the calculation method for this minimal reserved bandwidth $RsvRsc_{\min}^{i}$ is as shown in formula (1):

$$RsvRsc_{\min}^{i} = \frac{R_{\min}^{i,1} + R_{\min}^{i,2} + \cdots + R_{\min}^{i,N}}{\eta_i} \qquad (1)$$

in the formula (1), $R_{\min}^{i,j}$ denotes the minimal reserved rate of the $j^{th}$ connection of the terminal i, wherein i, j and N are all natural numbers, and the values of j are 1, 2, ..., N; $\eta_i$ denotes the utilization efficiency of the bandwidth of the terminal i, namely the bandwidth utilization ratio of the terminal i; $RsvRsc_{\min}^{i}$ denotes the minimal reserved bandwidth of the terminal i, namely the priority of congestion processing after the first screening.

It should be noted that when the terminal establishes or modifies the service stream, the base station will store related information of the terminals, and the related information of these terminals includes: the MPR and service connection parameter and so on, wherein this service connection parameter includes $R_{\min}^{i,j}$ and $R_{\max}^{i,j}$ and so on, the $R_{\max}^{i,j}$ denotes the maximal reserved rate of the $j^{th}$ connection of the terminal i.

Herein, when the terminal accesses the network at the first time, $\eta_i$ is approximately estimated through the MPR used by the terminal, wherein since the terminal uses different MPRs due to different intensities for receiving or transmitting signal, the base station allocates the MPR for this terminal according to the intensities for receiving or transmitting signal by this terminal, while the efficiencies of the data amounts which can be borne by the terminals using different MPRs are also different. When the terminal accesses the network at the first time, the estimation method of its bandwidth utilization ratio $\eta_i$ is as shown in formula (2):

$$\eta_i = MPR * (1 - \alpha) \qquad (2)$$

In the formula (2), the MPR is the modulation coding rate used by the terminal, $\alpha$ denotes the overhead ratios of the Media Access Control (MAC) sub-layer and the physical layer (PHY), and the value range is 0~100 (the unit: %). Herein $\alpha$ is determined according to the experience or the general rule, for example the overheads of the MAC sub-layer and the physical layer can be determined according to the connection type and transmission data packet type used in the practical at most. Besides, the $\alpha$ can act as one configuration parameter of the base station, and also can be a fixed value, which is directly written into the program.

After calculating the minimal reserved bandwidth of the terminal, the acceptance control judgment is carried out on the connection requested by this terminal, namely: if the minimal reserved bandwidth requested by the terminal is more than the idle resources of the communication system, then the terminal access or the connection establishment is not allowed. Contrarily, if the minimal reserved bandwidth requested by the terminal is more than the idle resources of the communication system, then the terminal access or the connection establishment is allowed, and the normal data transmission is carried out.

In the particular implementation, the acceptance control algorithm can be modified according to the particular selected acceptance control strategy. Generally, the common acceptance control judgment algorithm is denoted as the formula (3):

$$\text{the total available resource} \times \beta \geqslant \text{resource requested by the accessed connections} + \text{the new requested resource} \qquad (3)$$

in the formula (3), the coefficient $\beta$ denotes the proportion of the idle resources in the communication system to the total available resources of the communication system, the value range of the $\beta$ is between 0%~100%, the total available resources of the communication system $\times \beta$ denotes the idle resources of the communication system, and the particular value of $\beta$ is determined according to the reserved idle resources required by the communication system. The larger the value of $\beta$ is, the more the idle resource of the communication system is.

Resources requested by the accessed connections + the new requested resources denotes the resources requested by the terminal, wherein the "resource" of the right side of the inequation denotes the resource occupation amount, namely the minimal reserved bandwidth or the maximal reserved bandwidth. Thus, the formula (3) denotes: when the idle resource of the communication system is more than or equal to the resource requested by the terminal, then the terminal is allowed to access the network or establish the requested connection with the network.

For example, when the "resource" of the right side of the inequation in formula (3) is the minimal reserved bandwidth, then the used acceptance control algorithm is: the total available resource of the communication system $\times \beta \geq$ the minimal reserved bandwidth requested by the accessed connections of the terminal + the minimal reserved bandwidth newly requested by the terminal, then when the idle resource of the communication system is more than or equal to the minimal reserved bandwidth requested by the terminal, namely more than or equal to the minimal reserved bandwidth requested by the accessed connections of the terminal + the minimal reserved bandwidth newly requested by the terminal, the terminal is allowed to access the network or establish the requested connection with the network.

Herein, the acceptance control strategy also can be changed, namely the "resource" of the right side of the inequation in formula (3) uses the maximal reserved bandwidth. At this time, the used acceptance control algorithm can be obtained by properly modifying the formula (3) as: the total available resource of the communication system $\times \beta \geq$ the maximal reserved bandwidth requested by the accessed connections of the terminal + the maximal reserved bandwidth newly requested by the terminal, wherein the calculation method of this maximal reserved bandwidth is the same with the principle shown in the formula (1), and only the minimal reserved bandwidth $R_{\min}^{i,j}$ in the formula (1) is replaced by the maximal reserved rate $R_{\max}^{i,j}$, and the process of particularly calculating the maximal reserved bandwidth $RsvRsc_{\max}^{i}$ is as shown in formula (4):

$$RsvRsc_{\max}^{i} = \frac{R_{\max}^{i,1} + R_{\max}^{i,2} + \cdots + R_{\max}^{i,N}}{\eta_i} \qquad (4)$$

In the formula (4), $R_{\max}^{i,j}$ denotes the maximal reserved rate of the $j^{th}$ connection of the terminal i, wherein i, j, and N are all natural numbers, and the values of j are 1, 2, ..., N; $\eta_i$ denotes the bandwidth utilization ratio of the terminal i; $RsvRsc_{\max}^{i}$ denotes the maximal reserved bandwidth of the terminal i, namely the priority of congestion processing after the first screening.

Herein, the calculation method of the bandwidth utilization ratio should be illustrated, and the main calculation process is as follows:

said bandwidth utilization ratio is: for the terminal accessing at the first time, the product of the modulation coding rate of the terminal and (1-$\alpha$), wherein this $\alpha$ is the overhead ratio of the media access control sub-layer and the physical layer; and for the terminal not accessing at the first time, the ratio of the data amount transmitted by the terminal during the unit time to the number of the slots allocated during the unit time. And the particular description is as follows:

after the terminal accesses the network at the first time or establishes the new connection, the base station will detect the utilization of the air interface resource by each terminal or connection, namely, the base station carries out periodical statistic on bandwidth utilization ratio of each terminal according to information such as the transmitted data amount of each terminal or connection and the allocated bandwidth and so on in a statistic duration. For the terminal i accessing at the first time, the bandwidth utilization ratio $\eta_i$ of this terminal can be estimated by the formula (2), whereas the bandwidth utilization ratio $\eta_i$ of the terminal i not accessing at the first time is calculated by the method as shown in formula (5):

$$\eta_i = \frac{Num_{SDU}}{Num_{slot}} \qquad (5)$$

In the formula (5), $\eta_i$ denotes the bandwidth utilization ratio in a statistic duration of the terminal i, $Num_{SDU}$ denotes the data amount transmitted by each terminal during the unit time, and the unit of this $Num_{SDU}$ is bit. In a statistic duration, for example 1 second, the base station carries out statistic on the number of the Service Data Units (SDU) scheduled by the terminal i, thereby calculating to obtain the data amount $Num_{SDU}$ transmitted by each terminal during the unit time, wherein the number of SDUs corresponds to the real transmitted data amount, excluding the overheads of the MAC sub-layer and the physical layer. In the formula (5), $Num_{slot}$ denotes the number of slots allocated during the unit time, herein the base station will allocate the corresponding slot for this terminal according to information such as the service connection parameter (namely the QoS parameter), the current transmitted data amount, and MPR of the terminal and so on, the base station carries out statistic of the number of slots allocated for the terminal i during the statistic time, and then calculates to obtain the number of allocated slots $Num_{slot}$ in the unit time. Herein, said statistic time and statistic period are set according to the performance of the communication system and the accumulated experiences in the practical communication process.

Besides, if the terminal is allowed to access the network, or successfully establishes the connection with the network, then the base station will duly update the minimal reserved bandwidth requested by the terminal or connection according to the change of the MPR of the terminal and the service connection parameter and so on in combination of formulas (1) and (5) in the subsequent processes, for example, in the operation of transmitting data. The base station updates said bandwidth utilization ratio according to the resource allocation of the terminal, the change of the MPR, the service connection parameter, the transmitted data amount and the change of the wireless network environment in combination of the formula (5).

Herein, duly updating the minimal reserved bandwidth and bandwidth utilization ratio is due to that the minimal unit of the bandwidth allocation is the slot and the difference between the data amount which can be borne in each slot is very large with the change of the wireless network environment and the MPR, and that is to say, the efficiencies for the terminal bearing the data amounts using different MPRs are different. For example, in the downlink, when the used MPR is QPSK-1/2, each slot can bear 48bits, whereas when the used MPR is 64QAM-5/6, each slot can bear 240bits, which is more than nearly 4 times higher than that of the QPSK-1/2.

Besides, the base station will record the obtained data of the minimal reserved bandwidths and the bandwidth utilization ratios after carrying out above calculation or update on various terminals, so that the communication system can rapidly determine the priorities of congestion processing of various terminals when the congestion occurs.

Below it will describe the implementation flow of the terminal and the network connecting and transmitting data according to the present invention, this example uses the minimal reserved bandwidth to denote the resource occupation amount, and the particular steps are as follows:

step 101, the terminal requests to access the network or requests to establish the new connection;

step 102, the base station calculates the minimal reserved bandwidth requested by the terminal according to the formula (1);

in this step, calculating the requested minimal reserved bandwidth is actually for the purpose of satisfying the requirement of step 103, and this minimal reserved bandwidth is taken as the acceptance control judgment strategy.

Step 103, the base station carries out the acceptance judgment according to the acceptance algorithm formula (3), and judges whether the terminal is allowed to access the network or establish the new connection with the network; and if allowed, step 104 is carried out, if not allowed, the current flow ends.

Step 104, the terminal accesses the network or establishes the new connection with the network;

step 105, the data is transmitted between the terminal and the network;

step 106, the base station duly updates the minimal reserved bandwidth and the bandwidth utilization ratio of the terminal in the process of transmitting data.

The base station correspondingly updates the minimal reserved bandwidth and the bandwidth utilization ratio required by the terminal according to formulas (1) and (5) based on the transmitted data amount and the allocated bandwidth in the process of transmitting data.

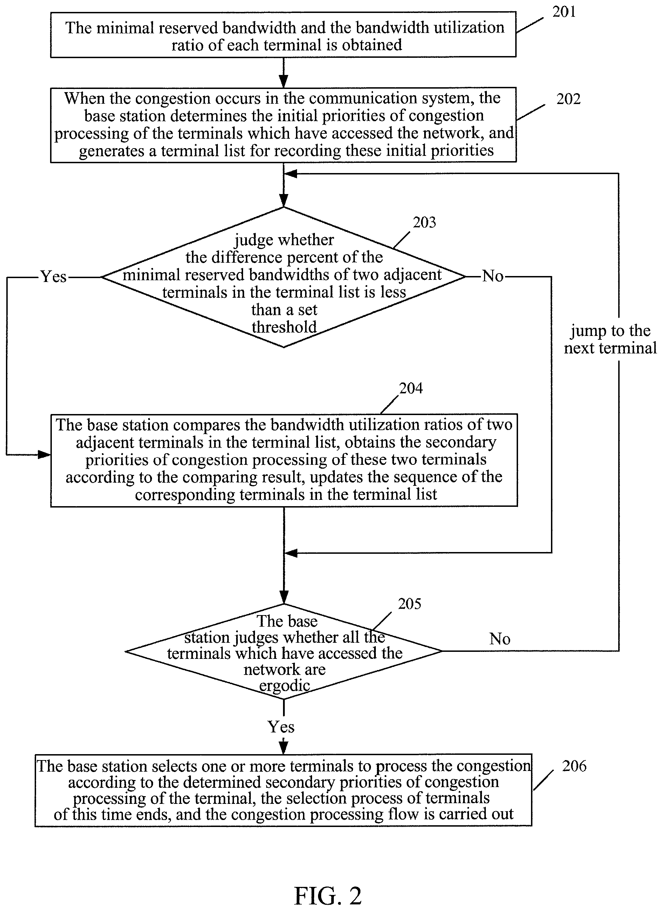

The above mentioned is the preparation work done for congestion processing in the present invention, the minimal reserved bandwidth and the bandwidth utilization ratio are calculated, updated and recorded so that the communication system is able to rapidly determine the priorities of terminals when the congestion occurs. Below it will describe the implementation process of the base station determining the priorities of congestion processing of terminals, with reference to FIG. 2, it shows a schematic diagram of the implementation flow of the method for selecting a terminal during congestion processing according to the present invention, and the method mainly comprises following steps of:

step 201, the minimal reserved bandwidth and the bandwidth utilization ratio of each terminal is obtained;

in this step, the operation of obtaining the minimal reserved bandwidth and the bandwidth utilization ratio of each terminal which has accessed the network comprises: calculating, recording and updating the minimal reserved bandwidth and the bandwidth utilization ratio of each terminals which has accessed the network. Herein, the method for calculating, recording and duly updating the minimal reserved bandwidth and the bandwidth utilization ratio of the terminal which has accessed the network refers to the above related description of calculating, recording and updating the minimal reserved bandwidth and the bandwidth utilization ratio, and herein it will not be repeated any more.

Herein said duly updating refers to that when the wireless network environment and MPR and so on of the terminal change, the base station updates the minimal reserved bandwidth and the bandwidth utilization ratio of the corresponding terminal.

Step 202, when the congestion occurs in the communication system, the base station determines the initial priorities of congestion processing of the terminals which have accessed the network, and generates a terminal list for recording these initial priorities;

when it is monitored that the congestion occurs in the communication system, the base station determines said initial priorities according to the minimal reserved bandwidths requested by the terminals which have accessed the network, and the rule for determining said initial priorities is: in the calculated minimal reserved bandwidths, the larger the minimal reserved bandwidth of the terminal is, the higher the initial priority of congestion processing of the terminal is, and further the initial priorities of congestion processing of the terminals are obtained.

Particularly, the base station sequences all terminals which have accessed the network according to the calculated minimal reserved bandwidths from large to small, and the larger the minimal reserved bandwidth of the terminal is, the higher the initial priority of congestion processing of the terminal is. Besides, the base station generates the terminal list according to the sequence result of the initial priorities, namely records the initial priorities of terminals which have accessed the network by the terminal list. Herein sequencing the initial priorities on various terminals which have accessed the network is mainly for the case of selecting at least two terminals to process congestion. Actually, when one terminal is selected to process the congestion, in order to save the time and improve the efficiency of congestion processing, it also does need to sequence the initial priorities for all terminals which have accessed the network. That is to say, the base station can select terminals with the largest and the second largest minimal reserved bandwidth among the calculated minimum reserved bandwidths so as to subsequently compare the difference among the minimal reserved bandwidths. In this case, the terminal list can only have the terminal situated at the first place with the largest minimal reserved bandwidth and the terminal situated at the second with place the second largest minimal reserved bandwidth.

It should be illustrated that the terminal list records the sequence of the initial priorities of the terminals, and this example sets the recorded sequence of the initial priorities of terminals sequencing recorded in the terminal list from high to low, and this example takes the sequence numbers of the terminals in the terminal list as the code numbers of individual terminals, namely the initial priority of the terminal 1 situated at the first place is higher than the initial priority of the terminal 2 situated at the second place.

Besides, the base station monitors and judges whether a congestion occurs in the communication system by using the particular congestion judgment algorithms. Herein the base station monitors and judges whether the congestion occurs in the communication system by obtaining the original resource allocation information, for example: how many times the terminal requests the resource during the unit time, how many times it is satisfied, and how many times it is not satisfied; or how much the total requested resource amount is, and how many times it is satisfied and how many times it is refused, and so on, and it is judged that whether the resources in the communication system is shortage and the shortage degree of the resources and so on, and further whether the congestion occurs in the communication system is judged in the combination with the applied congestion judgment algorithm. Actually, this example does not limit how to judge whether the congestion occurs in the communication system, which is due to that this example emphasizes on how to select the terminal to process the congestion after the congestion occurs.

Step 203, whether the difference percent of the minimal reserved bandwidths of two adjacent terminals in the terminal list is less than a set threshold is judged, and if less than the set threshold, step 204 is carried; if not less than the set threshold, step 205 is carried.

In the terminals of which the initial priorities have been determined, all terminals are sequenced according to their initial priorities from high to low, thus when the difference between the minimal reserved bandwidths of two sequenced adjacent terminals is not large, namely when the difference percent of the minimal reserved bandwidths of these two adjacent terminals is less than a set threshold, the characteristic of the terminal itself, for example the bandwidth utilization ratio of the terminal, should be sufficiently considered, the secondary priorities are determined according to said bandwidth utilization ratios, and the terminal with the lower bandwidth utilization ratio is selected to process the congestion; at this time, the lower the bandwidth utilization ratio of the terminal is, the higher the secondary priority of congestion processing of the terminal is.

Wherein, said threshold is a proportion of the bandwidth utilization ratio when the base station calculates the secondary priorities of terminals, and therefore, said threshold can be set according to the proportion of the bandwidth utilization ratio during calculating the secondary priorities in advance. That is to say, when the difference between minimal reserved bandwidths of two adjacent terminals is not large, the larger set threshold denotes more consideration on the bandwidth utilization ratio during calculating the secondary priority of the terminal.

When the difference between the values of minimal reserved bandwidths of two adjacent terminals is very large, namely the difference percent of the minimal reserved bandwidths of two adjacent terminals in the terminal list is not less than the set threshold, then the characteristic of the terminal itself is neglected, and the terminal with the larger minimal reserved bandwidth is preferentially selected to process the congestion. At this time, the secondary priorities of congestion processing of two adjacent terminals are the same with their initial priorities, and sequencing positions and sequencing numbers do not need to be updated, and it is proceeded to judge the difference percent of the minimal reserved bandwidths of the next group of two adjacent terminals, wherein said difference percent of the minimal reserved bandwidths of two adjacent terminals is the percent of the difference between the minimal reserved bandwidths requested by two adjacent terminals to the minimal reserved bandwidth of the terminal with the higher initial priority in the two adjacent terminals. Herein, said next group of two adjacent terminals is the terminal with the lowest secondary priority, and the terminal sequenced after this terminal with the lowest secondary priority and adjacent with this terminal with the lowest secondary priority in the terminal list.

It should be illustrated that the base station can just select the terminals with the largest and second largest initial priorities to determine the second priorities of them instead of sequencing the second priorities of individual terminals in the terminal list for the case that only one terminal should be selected to process the congestion.

For example, for two adjacent terminals, taking the terminal i and the terminal (i+1) as an example, the base station judges whether the difference *delta* (*i, i* +1) between minimal reserved bandwidths of the adjacent terminal i and terminal (i+1) in the terminal list satisfies the condition: $delta(i, i+1) < RsvRsc_{\min}^{i} * k$ , and if satisfying this condition, then step 204 is carried out; if not satisfying this condition, then step 205 is carried out, wherein said difference percent of said minimal reserved bandwidths is: the percent of the difference *delta* (*i,i*+1) between the minimal reserved bandwidth $RsvRsc_{\min}^{i}$ requested by the terminal i and the minimal reserved bandwidth $RsvRsc_{\min}^{i+1}$ requested by the terminal (i+1) to $RsvRsc_{\min}^{i}$ . The calculation method of the difference *delta* (*i,i*+1) of minimal reserved bandwidths of the terminal i and terminal (i+1) is as shown in formula (6):

$$delta(i, i+1) = RsvRsc_{\min}^{i} - RsvRsc_{\min}^{i+1} \qquad (6)$$

In the formula (6), *delta* (*i*,*i*+1) denotes the difference between the minimal reserved bandwidths of the terminal i and terminal (i+1), $RsvRsc^i_{\min}$ is the minimal reserved bandwidth requested by the terminal i, and $RsvRsc^{i+1}_{\min}$ is the minimal reserved bandwidth requested by the terminal (i+1). When

$$delta(i,j) < RsvRsc^i_{\min} * k \qquad\qquad (7)$$

it denotes that the difference between the minimal reserved bandwidths of the terminal i and terminal (i+1) is not very large, and therefore, the secondary priorities of congestion processing of these two adjacent terminals should be further determined according to the bandwidth utilization ratios of the terminal i and terminal (i+1).

In the formula (7), k is the threshold set by the base station, which is one parameter used by the base station to process congestion, the value range of k is 0~100%, and it is suitable for all the terminals and connections. The value of k denotes the inclination when the communication system considers the priority of congestion processing of the terminal, namely whether to stress on the minimal reserved bandwidth or the bandwidth utilization ratio. Herein the larger value of k denotes that it is to stress more on the bandwidth utilization ratio when determining the priority of congestion processing of the terminal, and the value of k also can be considered as: the proportion of the bandwidth utilization ratio when calculating the priorities of congestion processing of the terminal. Therefore, the configuration of k should be reasonable, if the value of the threshold k is too large, the bandwidth utilization ratio will affect the priority of congestion processing of the terminal excessively; if the value of the threshold k is too small, the affect of the bandwidth utilization ratio on the priority of congestion processing of the terminal can not be considered sufficiently. Generally, k is an experience value, and when the base station configures the value of k, the value of k is generally controlled within 30%.

Step 204, the base station compares the bandwidth utilization ratios of two adjacent terminals in the terminal list, obtains the secondary priorities of congestion processing of these two terminals according to the comparing result, updates the sequence of the corresponding terminals in the terminal list, and step 205 is performed;

wherein the lower the bandwidth utilization ratio of the terminal is, the higher the secondary priority of congestion processing of the terminal is, namely: if the bandwidth utilization ratio $\eta_{i+1}$ of the terminal (i+1) is less than the bandwidth utilization ratio $\eta_i$ of the terminal i, then the secondary priority of the terminal (i+1) is higher than the secondary priority of the terminal i. At this time, the terminal (i+1) and the terminal i exchange the sequence numbers in the terminal list, and the sequence position of the terminal (i+1) is updated to be in front of the terminal i. For example, after comparing the terminal 1 and terminal 2 in the terminal list, the secondary priority of the terminal 2 is higher than that of the terminal 1, thus the terminal 2 will exchange the sequence position and sequence number in the terminal list with the terminal 1, and the first one situated in the terminal list, namely the original terminal 2, is updated as the terminal 1 after comparing this time, and the original terminal 1 is updated as the terminal 2 after comparing this time. Thus, the corresponding terminals are sequenced according to the obtained secondary priorities. After each comparing, the sequence of terminals corresponding to secondary priorities in the terminal list is updated according to obtained secondary priorities, and thus the secondary priority of congestion processing of the terminal can be obtained.

Step 205, the base station judges whether all the terminals which have accessed the network are ergodic, and if all the terminals which have accessed the network are not ergodic, it is to return to the step 203, and it is to judge the secondary priorities of terminals which have not been ergodic; if all the terminals which have accessed the network are ergodic, then it is to perfom step 206;

The process of judging the secondary priorities of terminals which have not been ergodic comprises: if there is an unergodic terminal after the terminal with the lowest secondary priority in the current terminal list, then it means that not all terminals have been ergodic; the terminal with the lowest secondary priority, and the terminal sequenced after the terminal with the lowest secondary priority and adjacent with the terminal with the lowest secondary priority are selected as the ergodic objects of this time; it is to compare the size of the minimal reserved bandwidths of the ergodic objects at this time and the set threshold, namely carrying out the operation of step 203 on the selected ergodic objects.

If the two adjacent terminals of which the bandwidth utilization ratios are compared at this time are the terminal i and terminal (i+1), then the next group of terminals entering into the step 203 is the updated terminal (i+1) and terminal (i+2), for example, since the secondary priority of the original terminal 2 is higher than that of the original terminal 1, the original terminal 2 and the original terminal 1 will exchange the sequence positions and sequence numbers in the terminal list, then when the secondary priorities of congestion processing are continued to be compared and determined, the compared terminals are the updated terminal 2 and terminal 3, which are the original terminal 1 and original terminal 3.

Step 206, the base station selects one or more terminals to process congestion according to the determined secondary priorities of congestion processing of the terminal, the selection process of terminals at this time ends, and the congestion processing flow is carried out.

The base station can make the particular selection strategy after determining the secondary priorities of congestion processing by the above terminal selecting flow to select one or more terminals to process the congestion. If the percent p% of the number of selected terminals to the total number of terminals is set, then former p% terminals are selected starting from the terminals with higher secondary priorities according to the sequence of the secondary priorities of congestion processing; or the base station directly sets n to be the number of selected terminals, and then the former n terminals are selected from the sequence of the secondary priorities.

Besides, said congestion processing particularly is: disconnecting the network connection of the selected terminal or handing over the selected terminal to the adjacent cell base station; herein the congestion processing way of handing over the selected terminal to the adjacent cell base station is: triggering the selected terminals to scan the signal of the adjacent cell base station, and when the signal of the adjacent cell base station is scanned and obtained, then handing over the selected terminal to this adjacent cell base station, wherein the reason for selecting a plurality of terminals to process congestion is that when the selected terminal is handed over to the adjacent cell base station to process the congestion, since the case of the failure or terminal refusing exists in the handover process, the handover uncertainly succeeds, thus a plurality of terminals can be selected during congestion processing, and the handover flow is initiated for the selected terminals at the same time; or when the current congestion degree is severe, the congestion is processed by selecting a plurality of terminals at the same time, and thus the enforcement of congestion processing can be increased so as to achieve the object of more rapidly solving the congestion.

The above various examples are described as the combinations of a serial of actions for the purpose of briefness, however, the person having ordinary skill in the art should understand that the present invention is not limited by the sequence of described actions since certain steps can be performed in other order or be carried out at the same time.

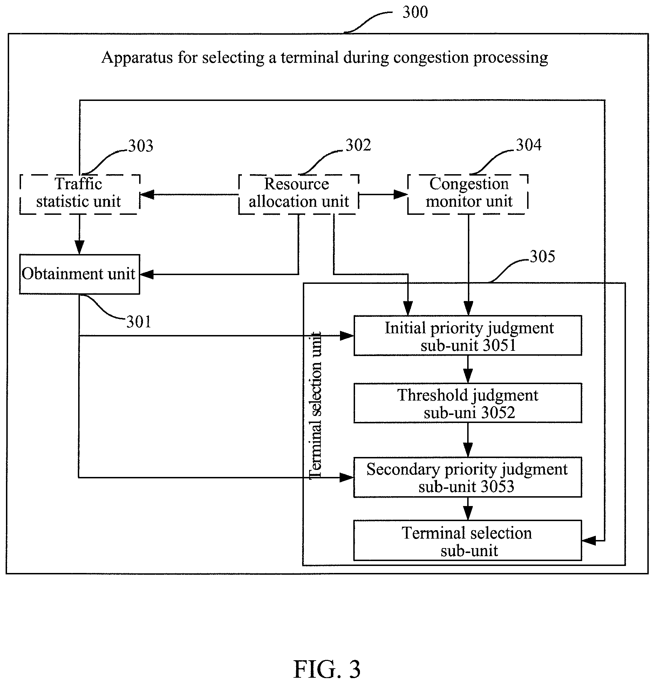

In order to implement the above method, the present invention further provides an apparatus for selecting a terminal during congestion processing, and with reference to FIG. 3, this apparatus 300 comprises: an obtainment unit 301 and a terminal selection unit 305, wherein

the obtainment unit 301 is for obtaining the minimal reserved bandwidths and the bandwidth utilization ratios of all terminals which have accessed the network, and is particularly for: calculating and recording the minimal reserved bandwidths and the bandwidth utilization ratios of all terminals which have accessed the network, updating the recorded minimal reserved bandwidths and bandwidth utilization ratios, and reporting the obtained minimal reserved bandwidths and bandwidth utilization ratios to the terminal selection unit 305;

the terminal selection unit 305 is for determining the initial priorities and the secondary priorities of terminals in combination with the data reported by the obtainment unit 301, and selecting one or more terminals to process the congestion according to the sequence of the secondary priorities of congestion processing of terminals.

This apparatus 300 further comprises: a resource allocation unit 302, a traffic statistic unit 303 and a congestion monitor unit 304, wherein

the resource allocation unit 302 is for allocating resources for transmitting data for each terminal or connection, and sending the data amount transmitted by the terminal and the information of resources allocated to this terminal to said obtainment unit 301, traffic statistic unit 303 and congestion monitor unit 304, and at the same time reporting the allocation information of resources to the terminal selection unit 305;

the traffic statistic unit 303 is for carrying out periodical statistic on the data amount transmitted via each terminal or connection, and when a congestion occurs, reporting statistic data to the terminal selection unit 305;

the congestion monitor unit 304 is for monitoring whether a congestion occurs in the base station, and when the congestion occurs, reporting the congestion state to the terminal selection unit 305.

In the above apparatus, said terminal selection unit 305 further comprises: an initial priority judgment sub-unit 3051, a threshold judgment sub-unit 3052, a secondary priority judgment sub-unit 3053, and a terminal selection sub-unit 3054, wherein

the initial priority judgment sub-unit 3051 is for determining the initial priority of congestion processing;

the threshold judgment sub-unit 3052 is for judging whether the difference percent of minimal reserved bandwidths of every two adjacent terminals in the terminal list is less than the set threshold, and sending the judgment result to the secondary priority judgment sub-unit 3053;

the secondary priority judgment sub-unit 3053 is for obtaining the bandwidth utilization ratios of two adjacent terminals of which the difference percent of minimal reserved bandwidths is less than the threshold, which is determined by the threshold judgment sub-unit 3052, and obtaining the secondary priorities of congestion processing by comparing the sizes of the bandwidth utilization ratios of these two adjacent terminals.

Wherein, the difference percent of minimal reserved bandwidths of said two adjacent terminals is: the percent of the difference between the minimal reserved bandwidths requested by two adjacent terminals to the minimal reserved bandwidth of the terminal with the higher initial priority in the two adjacent terminals. When the difference percent of the minimal reserved bandwidths is less than the set threshold, the terminal with the smaller bandwidth utilization ratio has the higher secondary priority of congestion processing.

Wherein, said initial priority judgment sub-unit 3051 is further for receiving the congestion state reported by said congestion monitor unit, obtaining the minimal reserved bandwidth from the obtainment unit 301, and generating the terminal list recording said initial priorities. Said initial priority judgment sub-unit 3051 selects the terminal with the larger minimal reserved bandwidth as the terminal with the higher initial priority after obtaining the minimal reserved bandwidth from the obtainment unit 301, and records the determined initial priority sequence in the terminal list.

Wherein, said secondary priority judgment sub-unit 3053 is further for obtaining the bandwidth utilization ratios from said obtainment unit 301, selecting the terminal with the lower bandwidth utilization ratio as the terminal with the higher secondary priority, and updating the sequence of the corresponding terminal in the terminal list according to obtained secondary priorities.

Wherein, the terminal selection sub-unit 3054 is for selecting one or more terminals to process the congestion according to the secondary priorities determined by said secondary priority judgment sub-unit 3053.

In the above examples, the description of each example has different emphases, and the part which is not described in detail in certain examples can refer related description of other examples. The above description is only preferable examples of the present invention, and is only used for describing and explaining the present invention, but is not for limiting the protection scope of the present invention. Any modifications and substitutions made to the present invention within the scope of the appended claims shall all fall into the protection scope of the present invention.

**Claims**

1.  A method for a base station selecting a terminal during congestion processing, comprising:

    obtaining a minimal reserved bandwidth (102, 106) and bandwidth utilization ratio of each terminal which has accessed a network (201), and setting a threshold; wherein, the bandwidth utilization ratio of each terminal is a utilization efficiency of bandwidth of the terminal;
    when the congestion occurs, the base station determining an initial priority of congestion processing of the terminal (202), obtaining a secondary priority of congestion processing of the terminal according to a size relationship between a difference percentage of the minimal reserved bandwidths of every two adjacent terminals and the set threshold, and the bandwidth utilization ratio; and
    selecting one or more terminals to process the congestion (206) according to a sequence of the obtained secondary priorities;
    wherein said base station determining the initial priority of congestion processing comprises:

       sequencing the terminals which have accessed the network according to the minimal reserved bandwidths from large to small, taking the sequence as the initial priorities of congestion processing of the terminals which have accessed the network, and recording said initial priorities into a terminal list; the larger the minimal reserved bandwidth of the terminal is, the higher the initial priority of congestion processing of the terminal is;
       said congestion processing comprises:

          disconnecting a network connection of the selected terminal or handing over the selected terminal to an adjacent cell base station;
          wherein a congestion processing way for handing over the selected terminal to the adjacent cell base station comprises:
          triggering the selected terminal to scan a signal of the adjacent cell base station, and when the signal of the adjacent cell base station is scanned and obtained, handing over said selected terminal to said adjacent cell base station.

2.  The method for selecting the terminal during congestion processing as claimed in claim 1, wherein said obtaining the minimal reserved bandwidth and bandwidth utilization ratio of each terminal which has accessed the network comprises:

    calculating the minimal reserved bandwidth (102) and bandwidth utilization ratio of each terminal which has accessed the network,
    wherein said minimal reserved bandwidth is: a ratio of a summation of minimal reserved rates of all connections of a terminal to the bandwidth utilization ratio of this terminal;
    said bandwidth utilization ratio is:

       a product of a modulation coding rate and $(1-\alpha)$ for the terminal accessing at a first time, wherein said $\alpha$ is a overhead ratio of a media access control sub-layer and a physical layer;

a ratio of data amount transmitted by the terminal during an unit time and a number of slots allocated during the unit time for the terminal accessing not at the first time.

3. The method for selecting the terminal during congestion processing as claimed in claim 2, wherein said obtaining the minimal reserved bandwidth and bandwidth utilization ratio of each terminal which has accessed the network further comprises:

recording the calculated minimal reserved bandwidth and bandwidth utilization ratio , and updating the minimal reserved bandwidth and bandwidth utilization ratio of each terminal which has accessed the network (106), wherein said updating the minimal reserved bandwidth and bandwidth utilization ratio of each terminal which has accessed the network is: updating said minimal reserved bandwidth according to data service connection parameters and a change of the bandwidth utilization ratio of the terminal; updating said bandwidth utilization ratio according to resource allocation of the terminal, a change of the modulation coding rate, and the service connection parameter, transmitted data amount and a change of wireless network environment.

4. The method for selecting the terminal during congestion processing as claimed in claim 1, wherein said obtaining the secondary priority of congestion processing of the terminal comprises:

al. judging whether the difference percent of the minimal reserved bandwidths of two adjacent terminals in the terminal list is less than the set threshold, if less than the set threshold, comparing the bandwidth utilization ratios of said two adjacent terminals, selecting a terminal with a lower bandwidth utilization ratio as a terminal with a higher secondary priority, and carrying out step a2; if not less than the set threshold, then said secondary priorities of congestion processing of said two adjacent terminals being same as the initial priorities, and carrying out step a2; a2. judging whether all the terminals which have accessed the network are traversed, if not traversed, then assessing the secondary priority of a terminal which is not traversed; and if traversed, then determining the secondary priorities of congestion processing of the terminals.

5. The method for selecting the terminal during congestion processing as claimed in claim 1, before judging whether all the terminals which have accessed the network are traversed, said method further comprises: updating the sequence of the terminal corresponding to said secondary priority in the terminal list according to obtained secondary priority of congestion processing of the terminal (204).

6. The method for selecting the terminal during congestion processing as claimed in claim 5, wherein said judging the secondary priority of the terminal which is not traversed comprises:

selecting a terminal with a lowest secondary priority, and a terminal sequenced after the terminal with the lowest secondary priority and adjacent with the terminal with the lowest secondary priority as traversed objects this time; comparing the difference percent of the minimal reserved bandwidths of the traversed objects this time and said set threshold; wherein said difference percent of the minimal reserved bandwidths of two adjacent terminals is: a percent of a difference between the minimal reserved bandwidths requested by two adjacent terminals to the minimal reserved bandwidth of the terminal with the higher initial priority in the two adjacent terminals.

7. An apparatus (300) for selecting a terminal during congestion processing, comprising an obtainment unit (301) and a terminal selection unit (305), wherein the obtainment unit is for obtaining a minimal reserved bandwidth and a bandwidth utilization ratio of each terminal which has accessed a network, and reporting the obtained minimal reserved bandwidth and bandwidth utilization ratio to the terminal selection unit; wherein, the bandwidth utilization ratio of each terminal is utilization efficiency of bandwidth of each terminal; the terminal selection unit is for determining an initial priority and a secondary priority of congestion processing of the terminal, and selecting one or more terminals to process the congestion according to a sequence of the secondary priorities of congestion processing of the terminals; said determining an initial priority of congestion processing comprises:

sequencing the terminals which have accessed the network according to the minimal reserved bandwidths from large to small, taking the sequence as the initial priorities of congestion processing of the terminals which have accessed the network, and recording said initial priorities into a terminal list; the larger the minimal reserved bandwidth of the terminal is, the higher the initial priority of congestion processing of the terminal is;
determining a secondary priority of congestion processing of the terminal comprises:

obtaining a secondary priority of congestion processing of the terminal according to a size relationship between a difference percentage of the minimal reserved bandwidths of every two adjacent terminals and the set threshold, and the bandwidth utilization ratio;
wherein said to process the congestion comprises:

to disconnect a network connection of the selected terminal or handing over the selected terminal to an adjacent cell base station;
wherein a congestion processing way for handing over the selected terminal to the adjacent cell base station comprises:
triggering the selected terminal to scan a signal of the adjacent cell base station, and when the signal of the adjacent cell base station is scanned and obtained, handing over said selected terminal to said adjacent cell base station.

8. The apparatus for selecting the terminal during congestion processing as claimed in claim 7, wherein said obtainment unit is particularly for calculating, recording and updating the minimal reserved bandwidth and bandwidth utilization ratio of each terminal which has accessed the network;
this apparatus further comprises a resource allocation unit (302), a traffic statistic unit (303) and a congestion monitor unit (304), wherein
the resource allocation unit is for allocating resources for transmitting data for each terminal or connection, and sending data amount transmitted by the terminal and resource information allocated to this terminal to the traffic statistic unit, said obtainment unit and said traffic statistic unit;
the traffic statistic unit is for carrying out periodical statistic on the data amount transmitted on each terminal or connection, and when the congestion occurs, reporting statistic data to the terminal selection unit;
the congestion monitor unit is for monitoring whether the congestion occurs in a base station, and when the congestion occurs, reporting a congestion state to the terminal selection unit.

9. The apparatus for selecting the terminal during congestion processing as claimed in claim 7 or 8, wherein said terminal selection unit comprises an initial priority judgment sub-unit (3051), a threshold judgment sub-unit (3052), a secondary priority judgment sub-unit (3053), and a terminal selection sub-unit (3054), wherein
the initial priority judgment sub-unit is for determining an initial priority of congestion processing;
the threshold judgment sub-unit is for judging whether difference percent of the minimal reserved bandwidths of every two adjacent terminals in a terminal list is less than a set threshold, and sending a judgment result to the secondary priority judgment sub-unit;
the secondary priority judgment sub-unit is for comparing the bandwidth utilization ratios of two adjacent terminals of which the difference percent of the minimal reserved bandwidths is less than the set threshold, which is determined by the threshold judgment sub-unit, to obtain the secondary priorities of congestion processing;
the terminal selection sub-unit is for selecting one or more terminals to process the congestion according to the secondary priorities determined by said secondary priority judgment sub-unit.

10. The apparatus for selecting the terminal during congestion processing as claimed in claim 9, wherein said initial priority judgment sub-unit is further for receiving a congestion state reported by said congestion monitor unit, obtaining the minimal reserved bandwidth from said obtainment unit, and generating the terminal list recording said initial priorities;
said secondary priority judgment sub-unit is further for obtaining the bandwidth utilization ratio from said obtainment unit, selecting a terminal with a lower bandwidth utilization ratio as a terminal with a higher secondary priority, and updating the sequence of the corresponding terminals in the terminal list according to the obtained secondary priorities.

**Patentansprüche**

1. Verfahren für eine Basisstation, das während Überlastungsverarbeitung ein Endgerät auswählt, umfassend:

Erhalten einer reservierten Mindestbandbreite (102, 106) und eines Bandbreiten-Nutzungsverhältnisses von jedem Endgerät, das auf ein Netz zugegriffen hat (201), und Einstellen eines Schwellenwerts; wobei das Bandbreiten-Nutzungsverhältnis von jedem Endgerät eine Bandbreiten-Nutzungseffizienz des Endgeräts ist;

wenn die Überlastung auftritt, durch die Basisstation, Bestimmen einer Ausgangspriorität von Überlastungsverarbeitung des Endgeräts (202), Erhalten einer Sekundärpriorität von Überlastungsverarbeitung des Endgeräts gemäß einer Größenbeziehung zwischen einem Differenzprozentsatz der reservierten Mindestbandbreiten von allen zwei benachbarten Endgeräten und dem eingestellten Schwellenwert und dem Bandbreiten-Nutzungsverhältnis; und

Auswählen von einem oder mehreren Endgeräten zum Verarbeiten der Überlastung (206) gemäß einer Sequenz der erhaltenen Sekundärprioritäten;

wobei das Bestimmen der Ausgangspriorität von Überlastungsverarbeitung durch die Basisstation umfasst:

Sequenzieren der Endgeräte, die auf das Netz zugegriffen haben, gemäß den reservierten Mindestbandbreiten von groß bis klein, Verwenden der Sequenz als die Ausgangsprioritäten der Überlastungsverarbeitung der Endgeräte, die auf das Netz zugegriffen haben, und Aufzeichnen der Ausgangsprioritäten in einer Endgeräteliste; je höher die reservierte Mindestbandbreite des Endgeräts ist, desto höher ist die Ausgangspriorität der Überlastungsverarbeitung des Endgeräts;

wobei die Überlastungsverarbeitung umfasst:

Trennen einer Netzverbindung des ausgewählten Endgeräts oder Übergeben des ausgewählten Endgeräts an eine benachbarte Zellenbasisstation;

wobei eine Art der Überlastungsverarbeitung zum Übergeben des ausgewählten Endgeräts an die benachbarte Zellenbasisstation umfasst:

Auslösen des Abtastens eines Signals der benachbarten Zellenbasisstation durch das ausgewählte Endgerät und, wenn das Signal der benachbarten Zellenbasisstation abgetastet und erhalten wird, Übergeben des ausgewählten Endgeräts an die benachbarte Zellenbasisstation.

2. Verfahren zum Auswählen des Endgeräts während Überlastungsverarbeitung nach Anspruch 1, wobei das Erhalten der reservierten Mindestbandbreite und des Bandbreiten-Nutzungsverhältnisses von jedem Endgerät, das auf das Netz zugegriffen hat, umfasst:

Berechnen der reservierten Mindestbandbreite (102) und des Bandbreiten-Nutzungsverhältnisses von jedem Endgerät, das auf das Netz zugegriffen hat,

wobei die reservierte Mindestbandbreite ist: ein Verhältnis einer Summierung von reservierten Mindestraten von allen Verbindungen eines Endgeräts zum Bandbreiten-Nutzungsverhältnis dieses Endgeräts;

wobei das Bandbreiten-Nutzungsverhältnis ist:

ein Produkt einer Modulationscodierungsrate und $(1-\alpha)$ für das Endgerät, das bei einem ersten Mal zugreift, wobei das $\alpha$ ein Overhead-Verhältnis einer Media Access Control Sublayer und einer Physical Layer ist;

ein Verhältnis einer durch das Endgerät während einer Zeiteinheit übertragenen Datenmenge und einer Anzahl von Schlitzen, die während der Zeiteinheit für das Endgerät zugewiesen werden, das nicht beim ersten Mal zugreift.

3. Verfahren zum Auswählen des Endgeräts während Überlastungsverarbeitung nach Anspruch 2, wobei das Erhalten der reservierten Mindestbandbreite und des Bandbreiten-Nutzungsverhältnisses von jedem Endgerät, das auf das Netz zugegriffen hat, ferner umfasst:

Aufzeichnen der/des berechneten reservierten Mindestbandbreite und Bandbreiten-Nutzungsverhältnisses und Aktualisieren der reservierten Mindestbandbreite und des Bandbreiten-Nutzungsverhältnisses von jedem Endgerät, das auf das Netz zugegriffen hat (106),

wobei das Aktualisieren der reservierten Mindestbandbreite und des Bandbreiten-Nutzungsverhältnisses von jedem Endgerät, das auf das Netz zugegriffen hat, ist: Aktualisieren der reservierten Mindestbandbreite gemäß Datendienst-Verbindungsparametern und einer Änderung beim Bandbreiten-Nutzungsverhältnis des Endgeräts;

Aktualisieren des Bandbreiten-Nutzungsverhältnisses gemäß Ressourcenzuweisung des Endgeräts, einer Änderung der Modulationscodierungsrate und dem Dienstverbindungsparameter, gesendeter Datenmenge und einer Änderung der drahtlosen Netzumgebung.

4. Verfahren zum Auswählen des Endgeräts während Überlastungsverarbeitung nach Anspruch 1, wobei das Erhalten der Sekundärpriorität der Überlastungsverarbeitung des Endgeräts umfasst:

a1. Beurteilen, ob der Differenzprozentsatz der reservierten Mindestbandbreiten von zwei benachbarten Endgeräten in der Endgeräteliste kleiner als der eingestellte Schwellenwert ist, wenn er kleiner als der eingestellte Schwellenwert ist, Vergleichen der Bandbreiten-Nutzungsverhältnisse von den zwei benachbarten Endgeräten, Auswählen eines Endgeräts mit einem niedrigeren Bandbreiten-Nutzungsverhältnis als ein Endgerät mit einer höheren Sekundärpriorität und Durchführen von Schritt a2;

wenn er nicht kleiner als der eingestellte Schwellenwert ist, dann die Sekundärprioritäten der Überlastungsverarbeitung der zwei benachbarten Endgeräte gleich den Ausgangsprioritäten sind, und Durchführen von Schritt a2;

a2. Beurteilen, ob alle Endgeräte, die auf das Netz zugegriffen haben, durchlaufen sind, wenn sie nicht durchlaufen sind, dann Zugreifen auf die Sekundärpriorität eines Endgeräts, das nicht durchlaufen ist; und wenn sie durchlaufen sind, dann Bestimmen der Sekundärprioritäten der Überlastungsverarbeitung der Endgeräte.

5. Verfahren zum Auswählen des Endgeräts während Überlastungsverarbeitung nach Anspruch 1, wobei das Verfahren vor dem Beurteilen, ob alle Endgeräte, die auf das Netz zugegriffen haben, durchlaufen sind, ferner umfasst: Aktualisieren der Sequenz des Endgeräts, das der Sekundärpriorität in der Endgeräteliste entspricht, gemäß der erhaltenen Sekundärpriorität der Überlastungsverarbeitung des Endgeräts (204).

6. Verfahren zum Auswählen des Endgeräts während Überlastungsverarbeitung nach Anspruch 5, wobei das Beurteilen der Sekundärpriorität des Endgeräts, das nicht durchlaufen ist, umfasst:

Auswählen eines Endgeräts mit einer niedrigsten Sekundärpriorität und eines Endgeräts, das nach dem Endgerät mit der niedrigsten Sekundärpriorität sequenziert ist und dem Endgerät mit der niedrigsten Sekundärpriorität benachbart ist, als dieses Mal durchlaufene Objekte;

Vergleichen des Differenzprozentsatzes der reservierten Mindestbandbreiten der dieses Mal durchlaufenen Objekte und des eingestellten Schwellenwerts;

wobei der Differenzprozentsatz der reservierten Mindestbandbreiten von zwei benachbarten Endgeräten ist: ein Prozentsatz einer Differenz zwischen den reservierten Mindestbandbreiten, die durch zwei benachbarte Endgeräte angefordert werden, zur reservierten Mindestbandbreite des Endgeräts mit der höheren Ausgangspriorität in den zwei benachbarten Endgeräten.

7. Vorrichtung (300) zum Auswählen eines Endgeräts während Überlastungsverarbeitung, die eine Erhalteeinheit (301) und eine Endgerät-Auswahleinheit (305) umfasst, wobei

die Erhalteeinheit zum Erhalten einer reservierten Mindestbandbreite und eines Bandbreiten-Nutzungsverhältnisses von jedem Endgerät, das auf ein Netz zugegriffen hat, und Melden der/des erhaltenen reservierten Mindestbandbreite und Bandbreiten-Nutzungsverhältnisses an die Endgerät-Auswahleinheit ist; wobei das Bandbreiten-Nutzungsverhältnis von jedem Endgerät die Bandbreiten-Nutzungseffizienz von jedem Endgerät ist;

die Endgerät-Auswahleinheit zum Bestimmen einer Ausgangspriorität und einer Sekundärpriorität der Überlastungsverarbeitung des Endgeräts und Auswählen von einem oder mehreren Endgeräten zum Verarbeiten der Überlastung gemäß einer Sequenz der Sekundärprioritäten der Überlastungsverarbeitung der Endgeräte ist;

wobei das Bestimmen einer Ausgangspriorität von Überlastungsverarbeitung umfasst:

Sequenzieren der Endgeräte, die auf das Netz zugegriffen haben, gemäß den reservierten Mindestbandbreiten von groß bis klein, Verwenden der Sequenz als die Ausgangsprioritäten der Überlastungsverarbeitung der Endgeräte, die auf das Netz zugegriffen haben, und Aufzeichnen der Ausgangsprioritäten in einer Endgeräteliste; je höher die reservierte Mindestbandbreite des Endgeräts ist, desto höher ist die Ausgangspriorität der Überlastungsverarbeitung des Endgeräts;

das Bestimmen einer Sekundärpriorität von Überlastungsverarbeitung des Endgeräts umfasst:

Erhalten einer Sekundärpriorität von Überlastungsverarbeitung des Endgeräts gemäß einer Größenbeziehung zwischen einem Differenzprozentsatz der reservierten Mindestbandbreiten von allen zwei benachbarten Endgeräten und dem eingestellten Schwellenwert und dem Bandbreiten-Nutzungsverhältnis;

wobei das Verarbeiten der Überlastung umfasst:

Trennen einer Netzverbindung des ausgewählten Endgeräts oder Übergeben des ausgewählten Endgeräts an eine benachbarte Zellenbasisstation;

wobei eine Art der Überlastungsverarbeitung zum Übergeben des ausgewählten Endgeräts an die benachbarte Zellenbasisstation umfasst:
Auslösen des Abtastens eines Signals der benachbarten Zellenbasisstation durch das ausgewählte Endgerät und, wenn das Signal der benachbarten Zellenbasisstation abgetastet und erhalten wird, Übergeben des ausgewählten Endgeräts an die benachbarte Zellenbasisstation.

**8.** Vorrichtung zum Auswählen des Endgeräts während Überlastungsverarbeitung nach Anspruch 7, wobei die Erhalteinheit insbesondere zum Berechnen, Aufzeichnen und Aktualisieren der reservierten Mindestbandbreite und des Bandbreiten-Nutzungsverhältnisses von jedem Endgerät, das auf das Netz zugegriffen hat, ist;
wobei diese Vorrichtung ferner eine Ressourcenzuweisungseinheit (302), eine Verkehrsstatistikeinheit (303) und eine Überlastungsüberwachungseinheit (304) umfasst, wobei
die Ressourcenzuweisungseinheit zum Zuweisen von Ressourcen zum Übertragen von Daten für jede/s Endgerät oder Verbindung und Senden einer durch das Endgerät übertragenen Datenmenge und diesem Endgerät zugewiesenen Ressourceninformationen an die Verkehrsstatistikeinheit, die Erhalteinheit und die Verkehrsstatistikeinheit ist;
die Verkehrsstatistikeinheit zum Durchführen periodischer Statistik über die auf jedem/jeder Endgerät oder Verbindung übertragene Datenmenge und, wenn die Überlastung auftritt, Melden von statistischen Daten an die Endgerät-Auswahleinheit ist;
die Überlastungsüberwachungseinheit zum Überwachen, ob die Überlastung in einer Basisstation auftritt, und wenn die Überlastung auftritt, Melden eines Überlastungszustands an die Endgerät-Auswahleinheit ist.

**9.** Vorrichtung zum Auswählen des Endgeräts während Überlastungsverarbeitung nach Anspruch 7 oder 8, wobei die Endgerät-Auswahleinheit eine Ausgangspriorität-Beurteilungsuntereinheit (3051), eine Schwellenwert-Beurteilungsuntereinheit (3052), eine Sekundärpriorität-Beurteilungsuntereinheit (3053) und eine Endgerätauswahl-Untereinheit (3054) umfasst, wobei die Ausgangspriorität-Beurteilungsuntereinheit zum Bestimmen einer Ausgangspriorität der Überlastungsverarbeitung ist;
die Schwellenwert-Beurteilungsuntereinheit zum Beurteilen, ob der Differenzprozentsatz der reservierten Mindestbandbreiten von allen zwei benachbarten Endgeräten in einer Endgeräteliste kleiner als ein eingestellter Schwellenwert ist, und Senden eines Beurteilungsergebnisses an die Sekundärpriorität-Beurteilungsuntereinheit ist;
die Sekundärpriorität-Beurteilungsuntereinheit zum Vergleichen der Bandbreiten-Nutzungsverhältnisse von zwei benachbarten Endgeräten ist, deren Differenzprozentsatz der reservierten Mindestbandbreiten kleiner als der eingestellte Schwellenwert ist, der durch die Schwellenwert-Beurteilungsuntereinheit bestimmt wird, um die Sekundärprioritäten der Überlastungsverarbeitung zu erhalten;
die Endgerät-Auswahluntereinheit zum Auswählen von einem oder mehreren Endgeräten zum Verarbeiten der Überlastung gemäß den Sekundärprioritäten ist, die durch die Sekundärpriorität-Beurteilungsuntereinheit bestimmt werden.

**10.** Vorrichtung zum Auswählen des Endgeräts während Überlastungsverarbeitung nach Anspruch 9, wobei die Ausgangspriorität-Beurteilungsuntereinheit ferner zum Empfangen eines durch die Überlastungsüberwachungseinheit gemeldeten Überlastungszustands, Erhalten der reservierten Mindestbandbreite von der Erhalteinheit und Erzeugen der Endgeräteliste ist, die die Ausgangsprioritäten aufzeichnet;
die Sekundärpriorität-Beurteilungsuntereinheit ferner zum Erhalten des Bandbreiten-Nutzungsverhältnisses von der Erhalteinheit, Auswählen eines Endgeräts mit einem niedrigeren Bandbreiten-Nutzungsverhältnis als ein Endgerät mit einer höheren Sekundärpriorität und Aktualisieren der Sequenz der entsprechenden Endgeräte in der Endgeräteliste gemäß den erhaltenen Sekundärprioritäten ist.

## Revendications

**1.** Procédé pour la sélection d'un terminal par une station de base durant un traitement de congestion, comprenant :

l'obtention d'une largeur de bande réservée minimale (102, 106) et d'un taux d'utilisation de largeur de bande de chaque terminal qui a accédé à un réseau (201), et le réglage d'un seuil ; dans lequel, le taux d'utilisation de largeur de bande de chaque terminal est un rendement d'utilisation de largeur de bande du terminal ;
quand la congestion se produit, la détermination par la station de base d'une priorité initiale de traitement de congestion du terminal (202), l'obtention d'une priorité secondaire de traitement de congestion du terminal en fonction d'une relation de taille entre un pourcentage de différence des largeurs de bande réservées minimales de tous les deux terminaux adjacents et le seuil réglé, et le taux d'utilisation de largeur de bande ; et
la sélection d'un ou plusieurs terminaux pour traiter la congestion (206) en fonction d'une séquence des priorités secondaires obtenues ;

dans lequel la détermination par ladite station de base de la priorité initiale de traitement de congestion comprend :

le séquencement des terminaux qui ont accédé au réseau en fonction des largeurs de bande réservées minimales de grande à petite, la prise de la séquence comme les priorités initiales de traitement de congestion des terminaux qui ont accédé au réseau, et l'enregistrement desdites priorités initiales dans une liste de terminaux ;

plus la largeur de bande réservée minimale du terminal est grande, plus la priorité initiale de traitement de congestion du terminal est élevée ; ledit traitement de congestion comprend :

la déconnexion d'une connexion de réseau du terminal sélectionné ou le transfert du terminal sélectionné à une station de base de cellule adjacente ;

dans lequel une manière de traitement de congestion pour le transfert du terminal sélectionné à la station de base de cellule adjacente comprend :

le déclenchement du terminal sélectionné pour balayer un signal de la station de base de cellule adjacente, et quand le signal de la station de base de cellule adjacente est balayé et obtenu, le transfert dudit terminal sélectionné à ladite station de base de cellule adjacente.

2. Procédé pour la sélection du terminal durant un traitement de congestion selon la revendication 1, dans lequel ladite obtention de la largeur de bande réservée minimale et du taux d'utilisation de largeur de bande de chaque terminal qui a accédé au réseau comprend :

le calcul de la largeur de bande réservée minimale (102) et du taux d'utilisation de largeur de bande de chaque terminal qui a accédé au réseau,

dans lequel ladite largeur de bande réservée minimale est : un rapport entre une totalisation de débits réservés minimaux de toutes les connexions d'un terminal et le taux d'utilisation de largeur de bande de ce terminal ;

ledit taux d'utilisation de largeur de bande est :

un produit d'un taux de codage de modulation et de $(1 - \alpha)$ pour le terminal accédant pour la première fois, dans lequel ledit $\alpha$ est un rapport de surdébit d'une sous-couche de commande d'accès au support et d'une couche physique ;

un rapport entre une quantité de données transmises par le terminal durant un temps unitaire et un nombre d'intervalles alloués durant le temps unitaire pour le terminal n'accédant pas pour la première fois.

3. Procédé pour la sélection du terminal durant un traitement de congestion selon la revendication 2, dans lequel ladite obtention de la largeur de bande réservée minimale et du taux d'utilisation de largeur de bande de chaque terminal qui a accédé au réseau comprend en outre :

l'enregistrement de la largeur de bande réservée minimale et du taux d'utilisation de largeur de bande calculés, et la mise à jour de la largeur de bande réservée minimale et du taux d'utilisation de largeur de bande de chaque terminal qui a accédé au réseau (106),

dans lequel ladite mise à jour de la largeur de bande réservée minimale et du taux d'utilisation de largeur de bande de chaque terminal qui a accédé au réseau est : la mise à jour de ladite largeur de bande réservée minimale en fonction de paramètres de connexion de service de données et d'un changement du taux d'utilisation de largeur de bande du terminal ;

la mise à jour dudit taux d'utilisation de largeur de bande en fonction d'une allocation de ressource du terminal, d'un changement du taux de codage de modulation, et du paramètre de connexion de service, d'une quantité de données transmises et d'un changement d'environnement de réseau sans fil.

4. Procédé pour la sélection du terminal durant un traitement de congestion selon la revendication 1, dans lequel ladite obtention de la priorité secondaire de traitement de congestion du terminal comprend :

al. le jugement si le pourcentage de différence des largeurs de bande réservées minimales de deux terminaux adjacents dans la liste de terminaux est inférieur au seuil réglé, s'il est inférieur au seuil réglé, la comparaison des taux d'utilisation de largeur de bandes desdits deux terminaux adjacents, la sélection d'un terminal avec un taux d'utilisation de largeur de bande inférieur comme un terminal avec une priorité secondaire plus élevée, et l'exécution de l'étape a2 ;

EP 2 429 232 B1

s'il n'est pas inférieur au seuil réglé, alors lesdites priorités secondaires de traitement de congestion desdits deux terminaux adjacents étant les mêmes que les priorités initiales, et l'exécution de l'étape a2 ;

a2. le jugement si tous les terminaux qui ont accédé au réseau sont traversés, s'ils ne sont pas traversés, alors l'évaluation de la priorité secondaire d'un terminal qui n'est pas traversé ; et s'ils sont traversés, alors la détermination des priorités secondaires de traitement de congestion des terminaux.

**5.** Procédé pour la sélection du terminal durant un traitement de congestion selon la revendication 1, avant le jugement si tous les terminaux qui ont accédé au réseau sont traversés, ledit procédé comprend en outre :

la mise à jour de la séquence du terminal correspondant à ladite priorité secondaire dans la liste de terminaux en fonction d'une priorité secondaire obtenue de traitement de congestion du terminal (204).

**6.** Procédé pour la sélection du terminal durant un traitement de congestion selon la revendication 5, dans lequel ledit jugement de la priorité secondaire du terminal qui n'est pas traversé comprend :

la sélection d'un terminal avec une priorité secondaire la plus basse, et d'un terminal avec la priorité secondaire la plus basse et adjacent au terminal séquencé après le terminal avec la priorité secondaire la plus basse comme des objets traversés cette fois ;

la comparaison du pourcentage de différence des largeurs de bande réservées minimales des objets traversés cette fois et dudit seuil réglé ;

dans lequel ledit pourcentage de différence des largeurs de bande réservées minimales de deux terminaux adjacents est : un pourcentage d'une différence entre les largeurs de bande réservées minimales exigées par deux terminaux adjacents pour la largeur de bande réservée minimale du terminal avec la priorité initiale la plus élevée dans les deux terminaux adjacents.

**7.** Appareil (300) pour la sélection d'un terminal durant un traitement de congestion, comprenant une unité d'obtention (301) et une unité de sélection de terminal (305), dans lequel

l'unité d'obtention est adaptée pour obtenir une largeur de bande réservée minimale et un taux d'utilisation de largeur de bande de chaque terminal qui a accédé à un réseau, et la notification de la largeur de bande réservée minimale et du taux d'utilisation de largeur de bande obtenus à l'unité de sélection de terminal ; dans lequel, le taux d'utilisation de largeur de bande de chaque terminal est un rendement d'utilisation de largeur de bande de chaque terminal ;

l'unité de sélection de terminal est adaptée pour déterminer une priorité initiale et une priorité secondaire de traitement de congestion du terminal, et sélectionner un ou plusieurs terminaux pour traiter la congestion en fonction d'une séquence des priorités secondaires de traitement de congestion des terminaux ;

ladite détermination d'une priorité initiale de traitement de congestion comprend :

le séquencement des terminaux qui ont accédé au réseau en fonction des largeurs de bande réservées minimales de grande à petite, la prise de la séquence comme les priorités initiales de traitement de congestion des terminaux qui ont accédé au réseau, et l'enregistrement desdites priorités initiales dans une liste de terminaux ;

plus la largeur de bande réservée minimale du terminal est grande, plus la priorité initiale de traitement de congestion du terminal est élevée ;

la détermination d'une priorité secondaire de traitement de congestion du terminal comprend :

l'obtention d'une priorité secondaire de traitement de congestion du terminal en fonction d'une relation de taille entre un pourcentage de différence des largeurs de bande réservées minimales de chaque deux terminaux adjacents et le seuil réglé, et le taux d'utilisation de largeur de bande ;

dans lequel ledit fait de traiter la congestion comprend :

le fait de déconnecter une connexion de réseau du terminal sélectionné ou transférer le terminal sélectionné à une station de base de cellule adjacente ;

dans lequel une manière de traitement de congestion pour le transfert du terminal sélectionné à la station de base de cellule adjacente comprend :

le déclenchement du terminal sélectionné pour balayer un signal de la station de base de cellule adjacente, et quand le signal de la station de base de cellule adjacente est balayé et obtenu, le transfert dudit terminal sélectionné à ladite station de base de cellule adjacente.

**8.** Appareil pour la sélection du terminal durant un traitement de congestion selon la revendication 7, dans lequel ladite unité d'obtention est adaptée en particulier pour le calcul, l'enregistrement et la mise à jour de la largeur de bande réservée minimale et du taux d'utilisation de largeur de bande de chaque terminal qui a accédé au réseau ;

cet appareil comprend en outre une unité d'allocation de ressources (302), une unité de statistique de trafic (303) et une unité de surveillance de congestion (304), dans lequel

l'unité d'allocation de ressources est adaptée pour allouer des ressources pour transmettre des données pour chaque terminal ou connexion, et pour envoyer une quantité de données transmise par le terminal et des informations de ressources allouées à ce terminal à l'unité de statistique de trafic, ladite unité d'obtention et ladite unité de statistique de trafic ;

l'unité de statistique de trafic est adaptée pour exécuter une statistique périodique sur la quantité de données transmise sur chaque terminal ou connexion, et quand la congestion se produit, notifier des données de statistique à l'unité de sélection de terminal ;

l'unité de surveillance de congestion est adaptée pour surveiller si la congestion se produit dans une station de base, et quand la congestion se produit, notifier un état de congestion à l'unité de sélection de terminal.

9. Appareil pour la sélection du terminal durant un traitement de congestion selon la revendication 7 ou 8, dans lequel ladite unité de sélection de terminal comprend une sous-unité de jugement de priorité initiale (3051), une sous-unité de jugement de seuil (3052), une sous-unité de jugement de priorité secondaire (3053), et une sous-unité de sélection de terminal (3054), dans lequel

la sous-unité de jugement de priorité initiale est adaptée pour déterminer une priorité initiale de traitement de congestion ;

la sous-unité de jugement de seuil est adaptée pour juger si un pourcentage de différence des largeurs de bande réservées minimales de chaque deux terminaux adjacents dans une liste de terminaux est inférieur à un seuil réglé, et envoyer un résultat de jugement à la sous-unité de jugement de priorité secondaire ;

la sous-unité de jugement de priorité secondaire est adaptée pour comparer les taux d'utilisation de largeur de bandes de deux terminaux adjacents dont le pourcentage de différence des largeurs de bande réservées minimales est inférieur au seuil réglé, qui est déterminé par la sous-unité de jugement de seuil, pour obtenir les priorités secondaires de traitement de congestion ;

la sous-unité de sélection de terminal est adaptée pour sélectionner un ou plusieurs terminaux pour traiter la congestion en fonction des priorités secondaires déterminées par ladite sous-unité de jugement de priorité secondaire.

10. Appareil pour la sélection du terminal durant un traitement de congestion selon la revendication 9, dans lequel ladite sous-unité de jugement de priorité initiale est adaptée en outre pour recevoir un état de congestion notifié par ladite unité de surveillance de congestion, obtenir la largeur de bande réservée minimale à partir de ladite unité d'obtention, et générer la liste de terminaux en enregistrant lesdites priorités initiales ;

ladite sous-unité de jugement de priorité secondaire est adaptée en outre pour obtenir le taux d'utilisation de largeur de bande à partir de ladite unité d'obtention, sélectionner un terminal avec un taux d'utilisation de largeur de bande inférieur comme un terminal avec une priorité secondaire plus élevée, et mettre à jour la séquence de terminaux correspondants dans la liste de terminaux en fonction des priorités secondaires obtenues.

FIG. 1

```
┌─────────────────────────────────────────────────────┐
│ The minimal reserved bandwidth and the bandwidth     │    201
│ utilization ratio of each terminal is obtained       │
└─────────────────────────────────────────────────────┘
                          │
                          ▼
┌─────────────────────────────────────────────────────┐
│ When the congestion occurs in the communication      │    202
│ system, the base station determines the initial      │
│ priorities of congestion processing of the terminals │
│ which have accessed the network, and generates a     │
│ terminal list for recording these initial priorities │
└─────────────────────────────────────────────────────┘
                          │
                          ▼
                                              203
              judge whether
         the difference percent of the
   Yes── minimal reserved bandwidths of two adjacent ──No──
         terminals in the terminal list is less
                     than a set
                     threshold
                                                          jump to the
                                                          next terminal
┌─────────────────────────────────────────────────────┐    204
│ The base station compares the bandwidth utilization  │
│ ratios of two adjacent terminals in the terminal     │
│ list, obtains the secondary priorities of congestion │
│ processing of these two terminals according to the   │
│ comparing result, updates the sequence of the        │
│ corresponding terminals in the terminal list         │
└─────────────────────────────────────────────────────┘
                          │
                          ▼
                                      205
              The base
       station judges whether all the
        terminals which have accessed the ──── No
             network are
                ergodic
                          │
                         Yes
                          ▼
┌─────────────────────────────────────────────────────┐    206
│ The base station selects one or more terminals to    │
│ process the congestion according to the determined   │
│ secondary priorities of congestion processing of the │
│ terminal, the selection process of terminals of this │
│ time ends, and the congestion processing flow is     │
│ carried out                                          │
└─────────────────────────────────────────────────────┘
```

FIG. 2

FIG. 3

**EP 2 429 232 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20050107107 A1